# EUROPEAN PATENT APPLICATION

(11) **EP 3 486 860 A1**
(43) Date of publication of application: **22.05.2019**
(21) Application number: 16908789.7
(22) Date of filing: 12.07.2016
(51) Int. Cl.: G06Q 40/08

(54) **RISK SHARING ASSISTANCE SYSTEM**

(71) Applicant: INSHARERANCE CO., Setagaya-ku Tokyo 157-0066 (JP)
(72) Inventor: NOGAMI, Kenichi, Tokyo 157-0066 (JP)
(74) Representative: Betten & Resch
(86) International application number: PCT/JP2016/070555
(87) International publication number: WO 2018/011885

(57) **Abstract**

A risk sharing support system is provided, which supports risk sharing that pays a payment amount in a case wherein a predetermined event occurs by sharing occurrences of various types of risks among participants. The risk sharing support system using the law of large numbers includes a commodity information storage portion; a commodity information providing processing portion sending information regarding a risk sharing commodity to a participant terminal used by a participant facing a similar risk collected through the Internet and the like; a participation application receiving processing portion receiving application information regarding the risk sharing commodity from the participant terminal; a participant information storage portion; a payment receiving processing portion receiving a payment request from the participant terminal of the participant who satisfied a payment condition prescribed in advance regarding the risk sharing commodity wherein the participant participated; and a payment amount calculation processing portion calculating an amount to be paid relative to the participant who received the payment request. The payment amount calculation processing portion calculates a payment amount per one item using information of a total amount of a participation price per one item prescribed in advance, and information of the number of items which become a payment object.

## Description

### Field of Technology

The present invention relates to a risk sharing support system which supports risk sharing that pays a payment amount in a case wherein a predetermined event occurs by sharing occurrences of various types of risks such as childbirth, earthquake, radiation exposure, tsunami, terrorism, end-of-life care, and the like among participants.

### Background Art

In a case wherein a traffic accident, fatal accident, and the like occur, damage or harm is incurred, so that in order to ensure or cover the damage or harm, insurances are often used. As for the insurances, various types of insurance products according to the risks are provided by respective insurance companies under the Insurance Business Act (Non-Patent Document 1, Non-Patent Document 2).

### Prior Art Document

### Patent Document

Non-Patent Document 1: General Incorporated Association, Life Insurance Association of Japan, "Life Insurance Simple Navigation", [Online], Internet <URL: http://www.seiho.or.jp/member/product/kantan-navi/>
Non-Patent Document 2: General Incorporated Association, The General Insurance Association of Japan, "Regarding Products of Respective Companies", [Online], Internet <URL: http://www.sonpo.or.jp/useful/kakusyasyouhin/house.html>

### Summary of the Invention

### Problems to be Solved by the Invention

In conventional insurance products, in a case wherein an event where an insurance has to be paid occurs, in a case of a corporation, a capital fund; in a case of security products, a principal; and in a case of Lloyd's Insurance Association, a property of a person undertaking the risk, they respectively become risks as security for the payment. Consequently, naturally, there is required a return according to the risk.

Since the insurance companies providing the conventional insurance products carry out businesses in accordance with regulations under the Insurance Business Act, there are especially required transparency, safety, and stability. Consequently, regarding an enormous risk such as tsunami, earthquake, or the like; a risk influenced by behavior or will of a person such as childbirth, terrorism, or the like; a risk influenced by a social condition such as care, advanced medical care, unemployment, or the like; a risk in a field wherein scientific knowledges are insufficient such as a damage caused by radiation, and the like; a long-term risk which can be easily affected by interest rates; a risk of longevity which is greatly affected by a progress of science or medical care; and the like, there is a case wherein an acceptance by the insurance company is difficult, expensive, restricted, or in the first place, the acceptance is rejected.

However, even if the risk causes a high cost or is impossible to be accepted by the conventional insurance products as mentioned above, economic benefits such as risk mitigation can be brought to the participants if risk transfer is carried out by sharing the risk thereof among the participants. However, conventionally, there is no mechanism for providing that.

### Means for Solving the Problems

Therefore, in view of the aforementioned problems, the present inventor has invented a risk sharing support system which supports risk sharing that can pay an amount so as to bring a risk mitigation effect by the law of large numbers in a case wherein a predetermined event occurs by sharing (risk mitigation) occurrences of various types of risks such as childbirth, earthquake, radiation exposure, Tsunami, terrorism, end-of-life care, and the like among participants facing a similar risk collected through the Internet and the like.

The first invention is the risk sharing support system carrying out processing regarding a risk sharing commodity using the law of large numbers to the participants collected through a network. The risk sharing support system comprises a commodity information storage portion storing information regarding the risk sharing commodity; a commodity information providing processing portion sending the information regarding the risk sharing commodity stored in the commodity information storage portion to a participant terminal used by the participant; a participation application receiving processing portion receiving application information regarding the risk sharing commodity from the participant terminal; a participant information storage portion storing information regarding the participant wherein the application was received; a payment receiving processing portion receiving a payment request from the participant terminal of the participant who satisfied a payment condition prescribed in advance regarding the risk sharing commodity wherein the participant participates; and a payment amount calculation processing portion calculating an amount to be paid relative to the participant who received the payment request of the risk sharing commodity. In the risk sharing support system, the payment amount calculation processing portion calculates the payment amount per one item using information of a total amount of a participation price per one item prescribed in advance, and information of the number of items which become a payment object.

An insurance company does not accept the risk in a conventional manner, and a generated risk is shared among the participants so as to mitigate the risk by the law of large numbers. Then, the present invention is formed so as to support a series of processing from the participation to the payment regarding the risk sharing commodity which shares the risk.

In the aforementioned invention, the risk sharing support system can be formed such that the commodity information storage portion stores information of an advertisement revenue by a web page regarding the risk sharing commodity and the like and/or a donation revenue relative to the risk sharing commodity, and information of an amount of a carry forward; and the payment amount calculation processing portion extracts the information of the advertisement revenue and/or the donation revenue, and the information of the amount of the carry forward stored in the commodity information storage portion, adds those to the total amount of the participation price, and using an amount thereof and the number of items which become the payment object, calculates the payment amount per one item.

In the aforementioned invention, the risk sharing support system can be formed such that the payment amount calculation processing portion calculates the payment amount per one item by carrying out an arithmetic operation of the aforementioned added amount ÷ the number of items of the payment object - handling fee.

The aforementioned respective inventions are formed so as to easily carry out calculation processing of a payment amount thereof in a case wherein the advertisement revenue or the donation revenue, and the carry forward are added up to be used for a payment source, in addition to the total amount of the participation price of the participant.

In the aforementioned invention, the risk sharing support system can be formed such that the commodity information storage portion further stores information of a donation article relative to the risk sharing commodity, and the payment amount calculation processing portion extracts the information of the donation article stored in the commodity information storage portion, and specifies the donation article per one item and/or the number of the donation article.

The present invention is formed so that in a case wherein the donation article is allocated relative to the risk sharing commodity, the donation article or the number thereof can be easily specified.

The first invention can be provided by allowing a computer to read a program of the present invention, and performing the program of the present invention. Namely, the present invention is a risk sharing support program allowing the computer to function as the commodity information providing processing portion extracting the information regarding the risk sharing commodity stored in the commodity information storage portion using the law of large numbers to the participants collected through the network, and sending the information regarding the risk sharing commodity to the participant terminal used by the participant; the participation application receiving processing portion receiving the application information regarding the risk sharing commodity from the participant terminal, and storing that in the participant information storage portion storing the information regarding the participant; the payment receiving processing portion receiving the payment request from the participant terminal of the participant who satisfied the payment condition prescribed in advance regarding the risk sharing commodity wherein the participant participates; and the payment amount calculation processing portion calculating the amount to be paid relative to the participant who received the payment request regarding the risk sharing commodity. In the risk sharing support program, the payment amount calculation processing portion calculates the payment amount per one item using the information of the total amount of the participation price per one item prescribed in advance, and the information of the number of items which become the payment object.

### Effect of the Invention

By using the risk sharing support system of the present invention, it becomes possible to accept the risk wherein the cost is high, or the acceptance is impossible by a mechanism of a conventional insurance as well.

### Brief Description of the Drawings

Fig. 1 is a drawing schematically showing one example of a whole system structure of a risk sharing support system of the present invention.
Fig. 2 is a drawing schematically showing one example of a hardware structure of a computer providing the risk sharing support system of the present invention.
Fig. 3 is a flowchart showing one example of a whole process of the risk sharing support system of the present invention.
Fig. 4 is a flowchart showing one example of a process of a participation application.
Fig. 5 is a flowchart showing one example of a process of receiving a participation price.
Fig. 6 is a flowchart showing one example of a process of a payment reception.
Fig. 7 is a flowchart showing one example of a process of a payment amount calculation.
Fig. 8 is a flowchart showing one example of a process of a payment.
Fig. 9 is a drawing schematically showing one example of a commodity information storage portion.
Fig. 10 is a drawing schematically showing one example of a required information input screen.
Fig. 11 is a drawing schematically showing one example of a screen carrying out a payment request.

### Best Modes of Carrying out the Invention

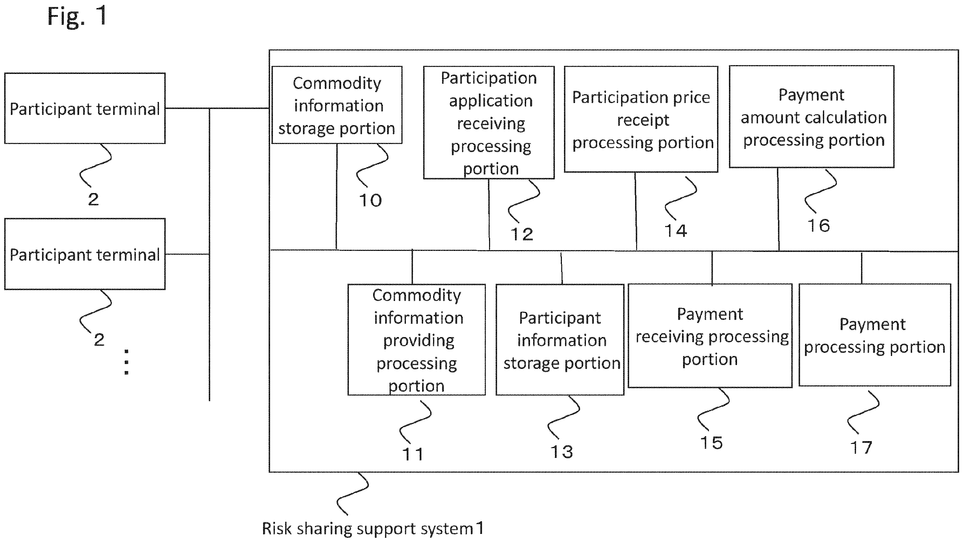

One example of a whole structure of a risk sharing support system 1 of the present invention is shown in Fig. 1. The risk sharing support system 1 is a computer used by operators (including organizations such as corporations, associations, and the like, and individuals as well) operating risk sharing. The computer includes a server, a personal computer, and the like; however, it may be a portable type communication terminal such as a tablet type computer, a smartphone, and the like.

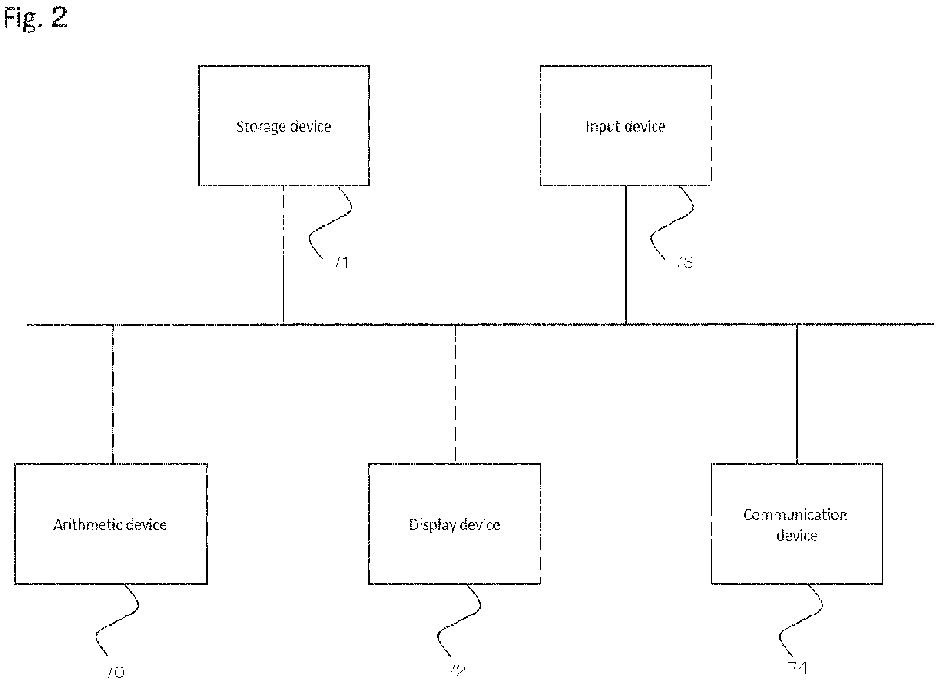

Fig. 2 shows one example of a hardware structure of the computer. The computer includes an arithmetic device 70 such as CPU performing arithmetic processing of a program, and the like; a storage device 71 such as RAM storing information, a hard disk, and the like; and a communication device 74 transmitting and receiving a processing result of the arithmetic device 70 or information stored in the storage device 71 through a network such as the Internet, LAN, and the like. Also, the computer may include a display device 72 such as a display and the like, and an input device 73 such as a keyboard, a pointing device (a mouse, a ten key, etc.) and the like.

Incidentally, the respective drawings show a case wherein each computer is represented by one computer, however, a function thereof may be distributed to a plurality of computers to be carried out. In each measure in the present invention, the function thereof is only logically distinguished, and may have the same area physically or practically. Also, the risk sharing support system 1 may be functioned by an unprescribed large number of computers wherein the server, a cloud server, or block chain is mounted, or the server thereof and the like.

The risk sharing support system 1 can transmit and receive information between the relevant operator and a participant terminal 2 which is the computer used by a participant participating in a commodity of risk sharing provided by the operator through the network such as the Internet and the like.

The risk sharing support system 1 includes a commodity information storage portion 10; a commodity information providing processing portion 11; a participation application receiving processing portion 12; a participant information storage portion 13; a participation price receipt processing portion 14; a payment receiving processing portion 15; a payment amount calculation processing portion 16; and a payment processing portion 17.

The commodity information storage portion 10 stores information regarding the commodity of the risk sharing provided by the operator operating a risk sharing commodity. The commodity regarding the risk sharing represents that in a case wherein a plurality of participants participates (execution of contract) in the risk sharing commodity, an amount calculated by a predetermined calculation formula using an expense (participation price) collected at a time of participation from a participant thereof is paid to the participant (participant wherein an event prescribed in advance occurred or did not occur) who satisfied a payment condition prescribed in advance within a period prescribed in advance (for example, in one year).

As for the risk sharing commodity, there are childbirth, earthquake, tsunami, an accident at a nuclear power plant, death by terrorism, end-of-life care, a disconnection of a lifeline for a prescribed time or more, a computer network breakdown for a prescribed time or more, a power imbalance, and the like as one example. Incidentally, the above examples are shown as examples of the risk sharing commodity of the present invention wherein risk mitigation can be provided for events which are difficult or impossible to be accepted by a conventional insurance.

The childbirth is the commodity payable to the participant who gave birth (payment condition) by a predetermined term from a beginning period as the beginning period to be ten months after a contract starting date. Also, the earthquake is the commodity payable to the participant who registered a point of the earthquake in a case wherein the earthquake with a magnitude of 6.5 or more occurred (payment condition) within a predetermined range from an object point, for example, within a range of a radius of 25 miles (40 kilometers) by the predetermined term from the contract starting date. Incidentally, there may be a case wherein a plurality of payment conditions is set, and any of the payment conditions is satisfied as well.

Tsunami is the commodity payable to the participant who registered a point of tsunami in a case wherein, for example, tsunami with one meter or more above the ground arrived (payment condition) at the object point by the predetermined term from the contract starting date. The accident at the nuclear power plant is the commodity payable to the participant registering the nuclear power plant thereof in a case wherein a severe accident by the nuclear power plant which becomes an object occurred (payment condition) by the predetermined term from the contract starting date. The death by terrorism is the commodity payable in a case wherein the participant died (payment condition) by the terrorism by the predetermined term from the contract starting date. The end-of-life care is the commodity payable in a case wherein a needed supporting degree or a needed caring degree of an object person (including the participant) arises by the predetermined term from the beginning period which is set as, for example, a day when three months passed at the contract starting date. The disconnection of the lifeline is the commodity payable to the participant in a case wherein the lifeline prescribed in advance was down (disconnected) (payment condition) for the prescribed time or more by the predetermined term from the contract starting date. The computer network breakdown is the commodity payable to the participant in a case wherein a computer network prescribed in advance was down (disconnected) (payment condition) for the prescribed time or over by the predetermined term from the contract starting time. The power imbalance is the commodity payable to the participant in a case wherein an imbalance with more than a fixed amount emerged (payment condition) to the participant who is a power supplier by the predetermined term from the contract starting date.

Incidentally, in those commodities, the predetermined term may be set with a plurality of periods, such as, for example, the last day of December every year. In that case, the payment is carried out per the predetermined term.

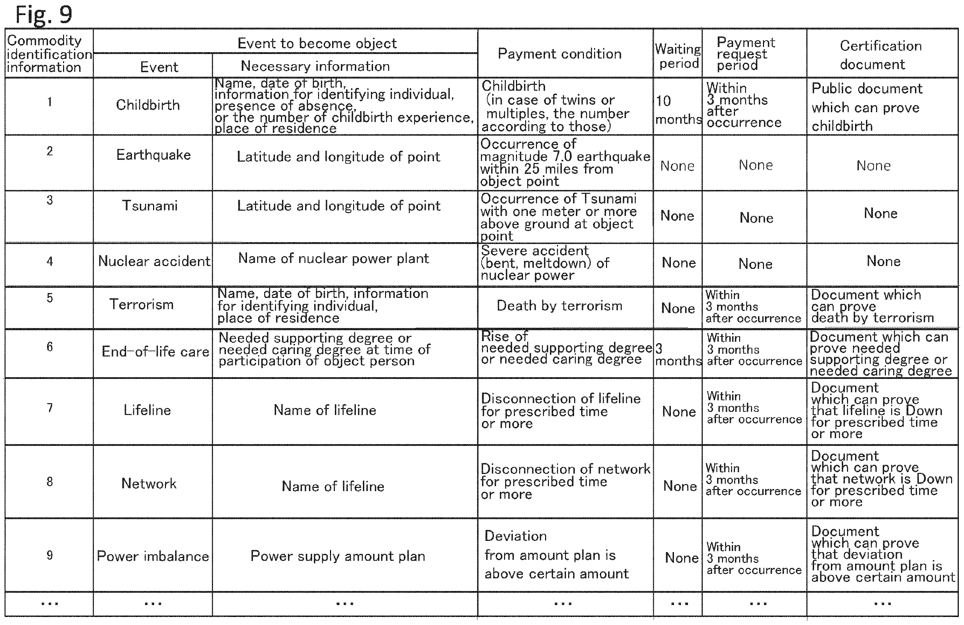

Thus, in the commodities, there are various types of information such as the event to become the object, a payment object period (for example, from January 1st to the last day of December every year), a contract date, an expiry date, the payment condition, a waiting period, the beginning period after an end of the waiting period, an end date (predetermined term) of the payment object period, a payment request period, certification information, and the like, and the commodity information storage portion 10 stores the aforementioned information. Fig. 9 schematically shows one example of the commodity information storage portion 10.

Also, as described hereinafter, an input of information such as advertisement revenues in webpages regarding the risk sharing commodities thereof and the like, donation revenues, donation articles and the number thereof, and the like may be received by the risk sharing support system 1, and the aforementioned information may be stored in the commodity information storage portion 10. Also, in a case wherein there was a carry forward (carry-over) regarding the same risk sharing commodity, an amount thereof is stored in the commodity information storage portion 10.

The commodity information providing processing portion 11 extracts the information regarding the commodities of the risk sharing stored in the commodity information storage portion 10 from the commodity information storage portion 10, and allows the participant terminal 2 to display the information.

The participation application receiving processing portion 12 receives application information of participating in the commodity of the risk sharing from the participant terminal 2, and allows the later-described participant information storage portion 13 to store the information of a participation application to the relevant commodity. Here, regarding the information of the participation application, it is preferred to store information regarding the commodity to participate such as identification information of the commodity to participate, the number of items of participation, date and time of the participation (date and time of the application), period, and the like, in addition to attribute information of the participant such as, for example, information for identifying the relevant individual, name, age, address, contact information such as email address, telephone number, etc., and the like.

The participant information storage portion 13 stores information such as the participation price or the presence or absence of the receipt thereof, whether or not there was a payment request, an amount of payment, a certification document, and the like, in addition to the attribute information of the participant received in the participation application receiving processing portion 12, and the information regarding the commodity wherein the relevant participant participates.

The participation price receipt processing portion 14 receives the receipt (collection) of the participation price to be paid regarding the commodity wherein the participant participates. In a case wherein the receipt is received, the information thereof is stored in the participant information storage portion 13. Incidentally, the participation price up to the predetermined term may be paid in a lump, or paid by the month. Also, a handling fee for the payment and the like may be asked to share a burden to a separate participant, or included in a handling fee for the participation as well.

The payment receiving processing portion 15 receives a payment request thereof from the participant terminal 2 in a case of having the participant who satisfied a predetermined payment condition regarding the commodity wherein the participant participated, and allows the participant information storage portion 13 to store that there was the payment request. Also, in a case wherein the certification document is necessary at a time of the payment request, the payment receiving processing portion 15 receives the information thereof from the participant terminal 2 by image information and the like, and allows the participant information storage portion 13 to store the information of the received certification document. In that case, the payment receiving processing portion 15 may be formed such that the operator displays the information of the certification document stored in the participant information storage portion 13 by a predetermined method, and after a confirmation of the operator, the later-described payment amount calculation processing is carried out. In that case, the payment receiving processing portion 15 may be formed such that corresponding to the certification document information of the participant information storage portion 13, information (flag and the like) showing the presence or absence of the confirmation of the certification document by the operator is stored, and the input of the information thereof is received by the risk sharing support system 1 from the computer operated by the operator so as to be stored in the participant information storage portion 13.

The payment amount calculation processing portion 16 calculates a payment amount per one item to be paid by money and the like (including money and virtual currency as well) relative to the participant wherein the payment request received by the payment receiving processing portion 15 is carried out. The payment amount per one item can be calculated by carrying out an arithmetic operation of:
Payment amount per one item = total amount of participation price ÷ number of items of a payment object - handling fee. Incidentally, the payment amount per one item of the participant whose beginning period starts from a middle of a predetermined period may be discounted.

Here, the handling fee is the handling fee of the operator operating the risk sharing commodity, and can be arbitrarily set as such as, for example, a proportion by a fixed amount, the number of items, or the payment amount, or a combination of those. The total amount of the participation price is the total amount of the participation price paid according to the predetermined period by the participant who participates in the relevant risk sharing commodity, and the number of items of the payment object is a total of the number of items of the participant who satisfied the payment condition of the relevant risk sharing commodity within the predetermined period, or the participant wherein the payment request was carried out in those participants.

Incidentally, in a case wherein there was an advertisement revenue obtained by website operated by the operator, or the donation revenue, and in a case wherein there was the carry forward, information of those amounts may be extracted from the commodity information storage portion, and added those amounts to the total amount of the participation price so as to become a parameter.

Also, in the payment amount per one item, there may be provided a guaranteed minimum amount or a maximum payment limit amount. Also, one portion may be paid in advance, or a refund may be paid at a midway cancellation time or a contract expiration time.

Also, in a case wherein there is the donation article relative to the risk sharing commodity, the payment amount calculation processing portion 16 may specify the donation article or the number thereof which is allocated relative to one item. For example, in a case wherein there is a plurality of the same type of donation articles, the number thereof can be specified by eliminating the number thereof by the number of items of the payment object. Also, in a case of a plurality of types, the donation article may be specified according to the number of items of the payment object and the like, or an input of an allocation of the donation article by a person in charge of Operation Division may be received as well.

In the payment amount calculation processing portion 16, in a case wherein the information of the presence or absence of the confirmation of the certification document is stored in the participant information storage portion 13, it is preferred that only the number of items of the participant wherein the information showing the confirmation is stored is the number of items of the payment object.

The payment processing portion 17 carries out processing of paying the payment amount calculated in the payment amount calculation processing portion 16 relative to the participant wherein the payment request was carried out. Namely, relative to a bank account designated by the participant wherein the payment request was carried out and the like, the payment processing portion 17 provides instruction to a system of a financial institution to pay a calculated payment amount. Incidentally, in a case wherein there is the donation article, the payment processing portion 17 sends that separately.

### First Example

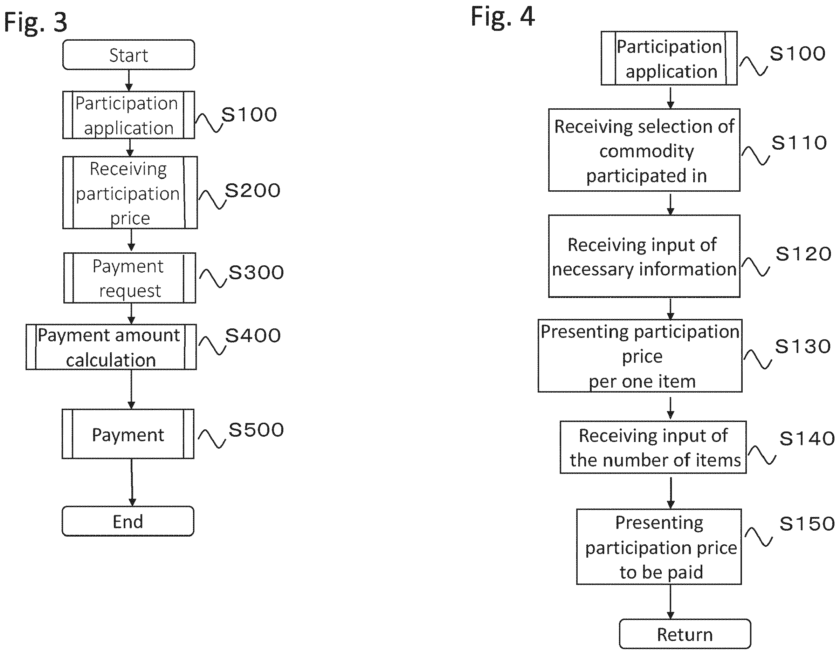

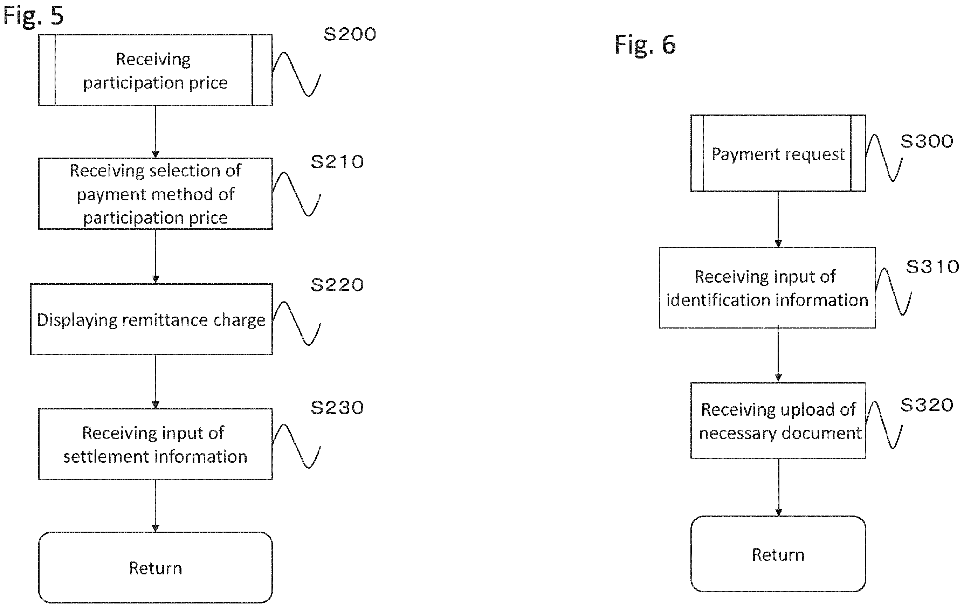

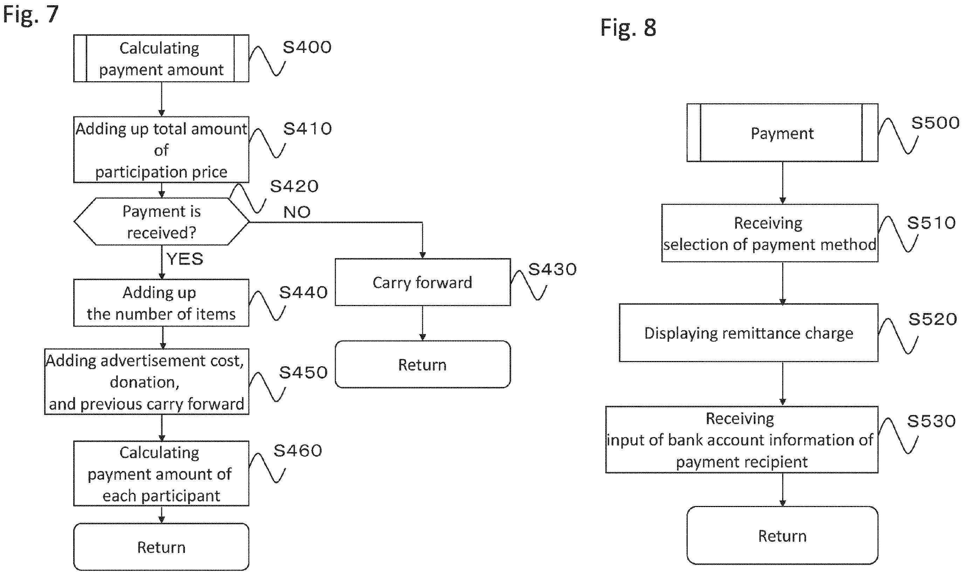

Next, one example of the process of the risk sharing support system 1 of the present invention will be explained using flowcharts in Fig. 3 to Fig. 8. Incidentally, the operator of the risk sharing support system 1 forms the risk sharing commodity in advance, and stores the information regarding the commodity in the commodity information storage portion 10. Also, the participation price per one item by each risk sharing commodity is set as well, and stored in the commodity information storage portion 10.

First, processing of the participation application (S100) is carried out in the risk sharing support system 1. Namely, the participant (those interested in participating) who would like to apply for the participation in the risk sharing commodity provided by the risk sharing support system 1 carries out a predetermined operation in the participant terminal 2 so as to access the risk sharing support system 1. Thereby, the commodity information providing processing portion 11 refers to the commodity information storage portion 10, extracts the information regarding the risk sharing commodity registered in the risk sharing support system 1, and sends the information to the participant terminal 2. For example, in a case wherein the commodity information storage portion 10 is shown in Fig. 9, the commodity information providing processing portion 11 extracts the information regarding the risk sharing commodities regarding the childbirth, earthquake, tsunami, nuclear accident, terrorism, end-of-life care, lifeline, network, power imbalance, and the like, and sends the information to the participant terminal 2.

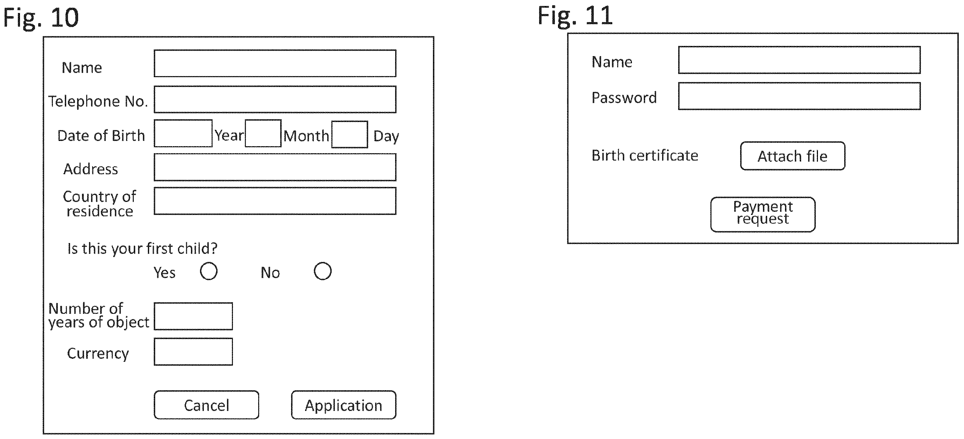

When the information regarding the risk sharing commodity is received by the participant terminal 2, the participant (those interested in participating) reads that information in the participant terminal 2, and selects the risk sharing commodity interested in participating. Information that the risk sharing commodity has been selected is sent to the risk sharing support system 1 from the participant terminal 2. When the information that the risk sharing commodity selected in the participation application receiving processing portion 12 has been selected is received (S110), the participation application receiving processing portion 12 sends a necessary information input screen corresponding to the relevant selected risk sharing commodity stored in the commodity information storage portion 10 to the participant terminal 2. Incidentally, in the necessary information input screen, it is preferred that there is included necessary information at a participation application time in the commodity information storage portion 10 shown in Fig. 9. Fig. 10 shows one example of the necessary information input screen. Fig. 10 shows one example of the necessary information input screen in a case of applying the risk sharing commodity of the "childbirth".

When the participant inputs the necessary information on the necessary information input screen displayed in the participant terminal 2, and presses down the "application", the input information is sent to the risk sharing support system 1 from the participant terminal 2, and is received by the participation application receiving processing portion 12 (S120). Then, when the information input on the necessary information input screen is received by the participation application receiving processing portion 12, the participation application receiving processing portion 12 extracts the information of the participation price per one item of the relevant risk sharing commodity stored in the commodity information storage portion 10 based on the information input on the relevant necessary information input screen, and sends that to the participant terminal 2 (S130) . The reason why the participant price is sent after receiving the input of the necessary information in advance is that, for example, in a case of the "childbirth", a probability of the payment condition changes depending on whether it is one's first childbirth, or second or later childbirth. Consequently, in the commodity information storage portion 10, there is stored the participation price per one item according to the payment condition, and on the necessary information input screen, it is preferred that the information which can specify the participation price per one item according to the aforementioned payment condition can be input.

Then, when the participant inputs the number of items of the participation in the participant terminal 2, and sends that to the risk sharing support system 1 from the participant terminal 2, the information of the number of items of the participation is received by the participation application receiving processing portion 12 (S140), and the participation application receiving processing portion 12 calculates the participation price according to the number of items of the participation, and sends the information thereof to the participant terminal 2 (S150).

The participant terminal 2 displays the information of the participation price to allow the participant to confirm that there is no particular problem. At that time, it is preferred that the information input and displayed in processes from S110 to S150, for example, the necessary information, the number of items of the participation, and the participation price to be paid are displayed in the participant terminal 2. Then, after the participant confirmed, when the participant terminal 2 receives a selection of "applying a participation" and the like, information of the determined participation application is sent to the risk sharing support system 1 from the participant terminal 2, and is received by the participation application receiving processing portion 12.

In the participation application receiving processing portion 12, when the information of determined participation application is received from the participant terminal 2, the information such as the information received on the necessary information input screen, the number of items of the participation, the participation price, and the like is stored in the participant information storage portion 13. At that time, the identification information identifying the relevant participant is automatically provided. Also, in the information of the presence or absence of the receipt of the participation price, there is stored information showing "unpaid".

The aforementioned processing is performed so as to carry out the processing of the participation application.

Next, after the participation application is carried out, receipt processing of the participation price calculated in S150 is performed (S200). Namely, when the information of the determined participation application is received by the participation application receiving processing portion 12, the participation price receipt processing portion 14 allows the participant terminal 2 to display a screen wherein a payment method is selected among a plurality of payment methods, for example, a credit card, PayPal, bank transfer, and the like as the payment method of the participation price relative to the participant terminal 2, and receives a selection thereof from the participant terminal 2 (S210).

Then, the participation price receipt processing portion 14 calculates a remittance charge based on the selection received in S210, and after displaying that in the participant terminal 2 (S220), the participation price receipt processing portion 14 may extract the participation price calculated in S150 from the participant information storage portion 13 to carry out a settlement by an amount wherein the remittance charge is added to the participation price. Namely, the participation price receipt processing portion 14 receives the input of settlement information, such as, for example, credit card number and an expiration date, and the like (S230), and performs settlement processing.

Then, after settlement completion, the participation price receipt processing portion 14 changes the information of the presence or absence of the receipt of the participation price of the relevant participant stored in the participant information storage portion 13 to information showing "paid", and stores that.

The receipt processing of the participation price is carried out by performing the aforementioned processing. Thereby, the relevant participant completes participation in the selected risk sharing commodity. Incidentally, in a case wherein the participation price is paid by the month, the second or later payment is carried out by an automatic receipt of the credit card, bank, or the like.

Next, in a case of having a participant who satisfied the payment condition within the payment object period, the participant thereof carries out the processing of the payment request from the participant terminal 2 (S300).

When the participant accesses to the risk sharing support system 1 by carrying out the predetermined operation from the participant terminal 2, and sends information that there was the payment request to the risk sharing support system 1 from the participant terminal 2, the payment receiving processing portion 15 sends a screen carrying out the payment request to the relevant participant terminal 2. One example of the screen carrying out the payment request is shown in Fig. 11.

The participant inputs the image information of authentication information such as the name of the relevant participant, the information for identifying the individual, password, and the like, and a document certifying that the payment condition was satisfied in the participant terminal 2, and carries out the predetermined operation from the participant terminal 2 so as to send the aforementioned information to the risk sharing support system 1 from the participant terminal 2.

The payment receiving processing portion 15 receives each information input on the screen carrying out the payment request from the participant terminal 2 (S310, S320), and stores that in the participant information storage portion 13 with a date when the payment request was carried out, and the like.

The processing of the payment request can be carried out by performing the aforementioned processing. Incidentally, in a case of the risk sharing commodity which can automatically determine sufficiency of the payment condition without waiting for the request for the earthquake and the like, automatic setting is carried out by batch processing.

Then, the risk sharing support system 1 which received the payment request performs the payment amount calculation processing after an expiration term of the payment object period of the relevant risk sharing commodity comes (S400).

First, the payment amount calculation processing portion 16 confirms if the expiration term comes based on the information (information of the expiration term) regarding the risk sharing commodity stored in the commodity information storage portion 10. When the payment amount calculation processing portion 16 confirms that the expiration term came, the payment amount calculation processing portion 16 specifies the participant participating in the relevant risk sharing commodity based on the participant information storage portion 13. Then, the total amount of the participation price of the specified participant is calculated based on the participant information storage portion 13 (S410).

Then, the payment amount calculation processing portion 16 determines whether or not there was the payment request regarding the relevant risk sharing commodity based on the participant information storage portion 13 (S420), and in a case wherein there was no payment request, in order to carry out the carry forward, the total amount of the calculated participation price is stored in the commodity information storage portion 10 (S430). The carry forward represents that in a case wherein there is no payment within the relevant payment object period, or in a case wherein there is provided the maximum payment limit amount, the total amount or one portion of the participation price thereof carries over to the next payment object period. At that time, after a predetermined handling fee equivalent amount is decreased from the total amount of the participation price, a balance may be carried forward.

On the other hand, in a case wherein it is determined that there was the payment request, a total of the number of items of the participant wherein there was the payment request is calculated based on the participant information storage portion 13 (S440). Then, an amount of the carry forward from a previous time is extracted from the information regarding the relevant risk sharing commodity of the commodity information storage portion 10, and the amount of the advertisement revenues and the donation revenues relative to the relevant risk sharing commodity is added to the total amount of the participation price calculated in S430 (S450).

Then, the payment amount calculation processing portion 16 calculates the payment amount per one item by carrying out an arithmetic operation of:
Payment amount per one item = amount calculated in S450 ÷ number of items of the payment object - handling fee. Then, after the payment amount per one item is calculated, the payment amount per the participant wherein the payment request was carried out is calculated according to the number of items of the participation (S460).

The calculation processing of the payment amount per the participant can be performed by performing the aforementioned processing. Then, after the calculation processing of the payment amount, the risk sharing support system 1 performs payment processing (S500).

First, the information, such as the email address and the like of the participant who becomes the payment object, stored in the participant information storage portion 13 is extracted, and an access to the screen for carrying out the input of the payment method is led by email and the like. The participant who received such an email accesses to the relevant screen presented by the payment processing portion 17 of the risk sharing support system 1 by the predetermined operation, and inputs the selection of the payment method such as the bank transfer and the like. When the information of the selection thereof is received by the payment processing portion 17 (S510), the payment processing portion 17 calculates the remittance charge by the relevant selected payment method, and sends that to the participant terminal 2 (S520). Then, the payment processing portion 17 receives the input of the information such as the bank account which becomes a payment recipient and the like from the participant terminal 2 (S530). The information such as the received bank account and the like is stored in association with the information of the relevant participant of the participant information storage portion 13.

Incidentally, at the participation application time, the information of the bank account which becomes the payment recipient and the like may be received in advance, and in that case, based on the relevant information stored in the participant information storage portion 13, the payment processing may be performed. Also, the remittance charge may be collected by being included in the handling fee in advance.

Then, the payment processing portion 17 sends an instruction to pay the payment amount by participant calculated in S460 relative to a settlement system of the financial institution and the like at a predetermined timing based on the information of the payment recipient stored in the participant information storage portion 13.

The payment processing can be performed by performing the aforementioned processing.

Incidentally, regarding the risk sharing commodity which can be participated in the aforementioned risk sharing support system 1, there may be provided an automatic renewal, or a renewal application may be received.

In a case wherein the renewal application is received instead of the automatic renewal, as with the participation application, the participant carries out the predetermined operation from the participant terminal 2 so as to display the risk sharing commodity to which an application has already been made by the participant, and by receiving the selection such as a "renewal" and the like, renewal processing may be performed as well. In that case, among the necessary information received by the participation application receiving processing portion 12, the attribute information and the like are not directly used, and in a case wherein there are information to be newly received at a renewal time, and the like, only the information thereof may be received as well.

Also, it may be formed in such a way as to pay the remittance charge, or to pay the handling fee to a contract agent with a predetermined fee rate as well.

Moreover, as for currencies of settlement, in addition to key currencies such as Japanese yen, U.S. dollar, Euro, and the like, there may be used virtual currencies such as an optional currency, an electronic money, millage, point, Bitcoin, and the like as well.

### Industrial Applicability

By using the risk sharing support system 1 of the present invention, it becomes possible to correspond to the risk wherein the cost is high, or an acceptance is impossible for corresponding by a mechanism of the conventional insurance as well.

### Explanation of Symbols

- 1:: Risk sharing support system

- 2:: Participant terminal
- 10:: Commodity information storage portion
- 11:: Commodity information providing processing portion
- 12:: Participation application receiving processing portion
- 13:: Participant information storage portion
- 14:: Participation price receipt processing portion
- 15:: Payment receiving processing portion
- 16:: Payment amount calculation processing portion
- 17:: Payment processing portion
- 70:: Arithmetic device
- 71:: Storage device
- 72:: Display device
- 73:: Input device
- 74:: Communication device

## Claims

1. A risk sharing support system carrying out processing regarding a risk sharing commodity using law of large numbers to participants collected through a network, comprising:
a commodity information storage portion storing information regarding the risk sharing commodity;
a commodity information providing processing portion sending information regarding the risk sharing commodity stored in the commodity information storage portion to a participant terminal used by a participant;
a participation application receiving processing portion receiving application information regarding the risk sharing commodity from the participant terminal;
a participant information storage portion storing information regarding the participant wherein the application was received;
a payment receiving processing portion receiving a payment request from the participant terminal of the participant who satisfied a payment condition prescribed in advance regarding the risk sharing commodity wherein the participant participated; and
a payment amount calculation processing portion calculating an amount to be paid relative to the participant who received the payment request of the risk sharing commodity,
wherein the payment amount calculation processing portion calculates a payment amount per one item using information of a total amount of a participation price per one item prescribed in advance, and information of a number of items which become a payment object.

2. A risk sharing support system according to claim 1, wherein the commodity information storage portion stores information of an advertisement revenue by a web page regarding the risk sharing commodity and the like and/or a donation revenue relative to the risk sharing commodity, and information of an amount of a carry forward, and
the payment amount calculation processing portion extracts the information of the advertisement revenue and/or the donation revenue, and the information of the amount of the carry forward stored in the commodity information storage portion, adds those to the total amount of the participation price, and using an amount thereof and the number of items which become a payment object, calculates a payment amount per one item.

3. A risk sharing support system according to claim 2, wherein the payment amount calculation processing portion calculates a payment amount per one item by carrying out an arithmetic operation of the added amount ÷ number of items of a payment object - handling fee.

4. A risk sharing support system according to any one of claims 1 to 3, wherein the commodity information storage portion further stores information of a donation article relative to the risk sharing commodity, and
the payment amount calculation processing portion extracts the information of the donation article stored in the commodity information storage portion, and specifies the donation article per one item and/or the number of the donation article.

5. A risk sharing support program allowing a computer to function as:
a commodity information providing processing portion extracting information regarding a risk sharing commodity stored in a commodity information storage portion using law of large numbers to a participant collected through a network, and sending the information regarding the risk sharing commodity to a participant terminal used by the participant;
a participation application receiving processing portion receiving application information regarding the risk sharing commodity from the participant terminal, and storing that in a participant information storage portion storing information regarding the participant;
a payment receiving processing portion receiving a payment request from the participant terminal of the participant who satisfied a payment condition prescribed in advance regarding the risk sharing commodity wherein the participant participated; and
a payment amount calculation processing portion calculating an amount to be paid relative to the participant who received the payment request regarding the risk sharing commodity,
wherein the payment amount calculation processing portion calculates a payment amount per one item using information of a total amount of a participation price per one item prescribed in advance, and information of number of items which become a payment object.
